# EUROPÄISCHE PATENTSCHRIFT

(11) **EP 3 148 849 B1**
(45) Veröffentlichungstag und Bekanntmachung des Hinweises auf die Patenterteilung: **15.08.2018**
(21) Anmeldenummer: 15730686.1
(22) Anmeldetag: 02.06.2015
(51) Int. Cl.: B60R 21/237

(54) **VERFAHREN ZUM FALTEN EINES GASSACKS SOWIE GASSACKMODUL**
METHOD FOR FOLDING AN AIRBAG, AND AIRBAG MODULE
PROCÉDÉ POUR PLIER UN SAC GONFLABLE ET MODULE SAC GONFLABLE

(30) Priorität: 02.06.2014 DE 102014007834
(43) Veröffentlichungstag der Anmeldung: 05.04.2017
(73) Patentinhaber: TRW Automotive Safety Systems GmbH, 63743 Aschaffenburg (DE)
(72) Erfinder: HEPP, Stefan, 63864 Glattbach (DE)
(74) Vertreter: ZF TRW Patentabteilung
(86) Internationale Anmeldenummer: PCT/EP2015/001121
(87) Internationale Veröffentlichungsnummer: WO 2015/185210

(56) Entgegenhaltungen:
- DE-C1- 19 502 744

## Beschreibung

Die Erfindung betrifft ein Verfahren zum Falten eines Gassacks sowie ein Gassackmodul mit einem Gasgenerator und einem Gassack, in dem der Gasgenerator sitzt.

Das Falten eines Gassacks ist dahin gehend eine äußerst anspruchsvolle Technik, weil das Falten einen erheblichen Einfluss auf den späteren Entfaltungsvorgang hat, weil das Falten selbst sehr gut reproduzierbar sein muss, um die Toleranzen in der Positionierung der Falten und des Gassacks so gering wie möglich zu halten, und weil das Falten auch wirtschaftlich erfolgen muss.

Gerade beim Falten von Lenkrad-Gassäcken gibt es verschiedenste Varianten. So ist zum Beispiel in der DE 101 44 776 C2 ein Verfahren beschrieben, bei dem der Lenkrad-Gassack zuerst zickzack gefaltet wird, sodass sich ein längliches Gassackpaket ergibt, welches dann mit seinen Enden nach innen umgeschlagen wird, und zwar vor dem Gasgenerator und damit nahe zur Entfaltungsöffnung im Gassackmodul.

Aus der DE 195 02 744 C1 ist ebenfalls ein Verfahren zum Falten eines Lenkrad-Gassacks bekannt, bei dem der Gassack durch parallele Zickzack-Falten in ein längliches Paket gefaltet wird, wobei in der Mitte dieses Pakets der Gasgenerator sitzt. Die beiden Enden des länglichen Pakets werden jeweils wellenförmig in entgegengesetzte Richtungen gefaltet und dann von außen radial in Richtung zum Gasgenerator gedrückt.

Aufgabe der Erfindung ist es, ein alternatives Faltverfahren zu schaffen, welches einen sehr platzsparend unterzubringenden Gassack erzeugt, der gute Entfaltungseigenschaften hat und vor allem sehr einfach und schnell gefaltet werden kann.

Das erfindungsgemäße Verfahren sieht folgende Schritte vor:
a) Zickzack-Falten eines Gassacks in einen länglichen Zustand,
b) Einlegen eines Gasgenerators und/oder eines Gassackhalteblechs in den Gassack, wobei der Gasgenerator und/oder das Gassackhalteblech im mittleren Drittel des länglich gefalteten Gassacks liegt, sodass zwei Gassackendabschnitte vom Gasgenerator seitlich abstehen,
c) Herumführen der Gassackendabschnitte um den Außenumfang des Gasgenerators und/oder des Gassackhalteblechs in entgegengesetzte Umfangsrichtungen und aufeinander zu, bis zu einem Umschlagbereich, in dem sich die Gassackendabschnitte zumindest nahezu berühren,
d) Umschlagen der Gassackendabschnitte ab dem Umschlagbereich nach außen und Herumführen der Gassackendabschnitte in Gegenrichtung um den Außenumfang des Gasgenerators und/oder des Gassackhalteblechs und den darauf liegenden, innen liegenden Teil der Gassackendabschnitte herum, zur Bildung eines außen liegenden Teils.

Durch das erfindungsgemäße Verfahren wird es möglich, den Gassack außenseitig mittels zweier großer, jeweils um fast 180° in Umfangsrichtung verlaufender, aufeinanderliegender Teile jedes Gassackendabschnitts sehr eng an den Außenumfang des Gasgenerators anzulegen. Das heißt, das zickzackförmige langgestreckte Gassackpaket wird anschließend nicht noch einmal häufig gefaltet, sondern verläuft bogenförmig um den Gasgenerator oder das Gassackhalteblech, um dann nach außen und nicht nach innen wie im Stand der Technik einmal gefaltet zu werden. Somit wird auch der Raum längs des Außenumfangs des Gasgenerators fast in seiner Gesamtheit als Unterbringungsraum für das Gassackpaket genutzt.

Vorzugsweise sollten die außen liegenden Teil der Gassackendabschnitte so weit umgeschlagen werden, dass ihre Enden einander berühren. Auch dies erfolgt im Hinblick darauf, die Strecke um den Gassack herum möglichst auszunutzen.

Darüber hinaus kann vorgesehen sein, dass der Gasgenerator im Schritt b) so im Gassack positioniert wird, dass quer zur Längserstreckung des zickzack gefalteten Gassacks Falten auf entgegengesetzten Umfangsseiten des Gasgenerators am Gasgenerator entlang verlaufen. In diesem Zwischenzustand des Faltungsverfahrens teilt sich sozusagen das längliche Gassackpaket zu seiner Mitte hin in zwei Paketabschnitte. Während die Gassackendabschnitte beispielsweise bezogen auf den mittig angeordneten Gasgenerator bei 3 Uhr und bei 9 Uhr liegen, verlaufen die sich aufteilenden Paketabschnitte in der Mitte einerseits bei 6 Uhr und andererseits bei 12 Uhr entlang des Gasgenerators und/oder des Gassackhalteblechs.

Das Gassackpaket selbst kann einerseits reproduzierbarer und andererseits platzsparender gefaltet werden, wenn der Gassack zur Schaffung der Zickzack-Faltung thermisch erwärmt und/oder gepresst wird. Wenn der Gassack erwärmt und gepresst wird, kommt es zu einer sogenannten thermofixierten Vorfaltung, deren Ergebnis dann ein längliches ziehharmonikaartiges Gassackpaket, welches einen Zwischenzustand des Gassacks bildet, ist.

Eine Ausführungsform der Erfindung sieht vor, dass der Gasgenerator torusförmig ist und die Falten am Außenumfang des Torus entlang gelegt sind.

Insbesondere ist das entsprechende Gassackmodul ein Lenkradmodul.

Der Gassack kann in einem topfförmigen Modulgehäuse gefaltet untergebracht sein.

Die gefalteten Abschnitte des Gassacks können in einem Umfangsspalt zwischen der Außenumfangswand des Modulgehäuses und dem Außenumfang des Gasgenerators verlaufen.

Zumindest ein Teil, vorzugsweise ein Großteil der Stirnwand des Gasgenerators, ist nur durch eine Gassacklage in Entfaltungsrichtung überdeckt. Das bedeutet, stirnseitig zur Austrittsrichtung des Gassacks ist der Gasgenerator nicht komplett und auch nicht großteils vom Gassackpaket überdeckt. In diesem zentralen Bereich wird dem Gas beim Entfalten deshalb relativ wenig Widerstand entgegengesetzt, was für eine schnelle Entfaltung im zentralen Bereich des Gassacks sorgt.

Optional kann vorgesehen sein, dass von dem innen liegenden Teil der beiden Gassackendabschnitte jeweils ein backenartig vorstehender Faltwulst, das heißt ein Teilabschnitt des Gassackpakets, über die Stirnwand des Gasgenerators ragt.

Gemäß einer bevorzugten Ausführungsform werden die einzelnen Faltungshöhen der zick-zack-förming gefalteten Luftsacklagen verschieden hoch ausgebildet. Vorzugsweise wird hierbei eine weiter innen zu liegen kommende (näher am Gasgenerator anzuordnende) Falte mit geringerer Höhe ausgebildet, als eine weiter außen zu liegen kommende (entfernter zum Gasgenerator anzuordnende) Falte. Es ist bevorzugt, dass eine minimale Faltenhöhe kleiner als die halbe Höhe des Gasgenerators oder des gefalteten Gassackpaketes ausgebildet wird. Daneben ist bevorzugt, dass eine maximale Faltenhöhe größer als die halbe Höhe des Gasgenerators oder des gefalteten Gassackpaketes, insbesondere in etwa oder (bis auf eine Dicke von ein bis fünf mal die Materaldicke des Gassackmaterials) genauso hoch wie die Höhe des Gasgenerators oder des gefalteten Gassackpaketes ausgebildet wird. Hierbei ist bevorzugt, dass eine minimale Faltenhöhe niedriger als 30mm, vorzugsweise als 20mm ausgebildet wird. Daneben ist bevorzugt, dass eine maximale Faltenhöhe höher als 35mm, vorzugsweise höher als 50mm, weiter vorzugsweise höher als 70mm ausgebildet wird.

Dies hat den Nutzen, dass die Faltung entsprechend an die Modulumgebung (Innenraumgeometrie) angepaßt werden kann, um eine bestmögliche Entfaltung (sogenannte Cordialentfaltung), insbesondere bei In- und Out of Position Lastfällen zu ermöglichen. Ein besonderer Vorteil dieser Ausführungsform der erfindungsgemäßen Faltung ist, dass mit dieser Entfaltungsmethodik bzw. Charakteristik auf 2-stufige, pyrotechnische Airbaggasgeneratoren in manchen Anwendungsfällen zum Schutz in sogenannten Out of Position Situationen verzichtet werden kann.

Ein weiterer Vorteil der erfindungsgemäßen Faltungsmethode ist eine sehr gute und schnelle Entfaltungscharakteristik des Luftsackes zwischen dem unteren Lenkradkranz und dem Abdomen des Fahrers, welche gegenüber chaotischen Faltungen eine weitere Verbesserung aufzeigt. Dies kommt insbesondere bei Fahrzeugsituationen in denen der Insasse nahe am Lenkrad sitzt (z.B. die sogenannte 5%-Frau) zum tragen.

Die Erfindung betrifft darüber hinaus auch ein Gassackmodul mit einem Gasgenerator und einem Gassack, in dem der Gasgenerator sitzt. Der Gassack ist in mehrere parallel zueinander verlaufende Falten gelegt, um in einem Zwischenzustand ein längliches Paket zu bilden. Der Gasgenerator liegt im mittleren Drittel des länglichen Pakets, wobei vom mittleren Drittel ausgehend Gassackendabschnitte des Pakets zu mindestens zwei Paketlagen, im Folgenden Teile genannt, gefaltet sind, wobei die beiden inneren Paketlagen (Teile) am Außenumfang des Gasgenerators entlang aufeinander zu bis zu einem Umschlagbereich verlaufen und dann nach außen umgeschlagen an der jeweiligen inneren Paketlage entlang in Gegenrichtung verlaufen. Die beiden Gassackendabschnitte werden also am Außenumfang des Gassacks entlang gelegt, um einen innen liegenden Teil zu bilden. Die Gassackendabschnitte werden dann nach außen umgeschlagen, um einen auf dem innen liegenden Teil des Pakets anliegenden, außen liegenden Teil zu schaffen.

Gemäß einer bevorzugten Ausführungsform sind einzelne der Faltungshöhen der zick-zack-förming gefalteten Luftsacklagen verschieden hoch ausgebildet. Vorzugsweise ist hierbei eine weiter innen zu liegen kommende (näher am Gasgenerator anzuordnende) Falte mit geringerer Höhe ausgebildet, als eine weiter außen zu liegen kommende (entfernter zum Gasgenerator anzuordnende) Falte. Es ist bevorzugt, dass eine minimale Faltenhöhe kleiner als die halbe Höhe des Gasgenerators oder des gefalteten Gassackpaketes ausgebildet ist. Daneben ist bevorzugt, dass eine maximale Faltenhöhe größer als die halbe Höhe des Gasgenerators oder des gefalteten Gassackpaketes, insbesondere in etwa oder (bis auf eine Dicke von ein bis fünf mal die Materaldicke des Gassackmaterials) genauso hoch wie die Höhe des Gasgenerators oder des gefalteten Gassackpaketes ausgebildet ist. Hierbei ist bevorzugt, dass eine minimale Faltenhöhe niedriger als 30mm, vorzugsweise als 20mm ausgebildet ist. Daneben ist bevorzugt, dass eine maximale Faltenhöhe höher als 35mm, vorzugsweise höher als 50mm, weiter vorzugsweise höher als 70mm ausgebildet ist.

Dies hat den Nutzen, dass die Faltung entsprechend an die Modulumgebung (Innenraumgeometrie) angepaßt werden kann, um eine bestmögliche Entfaltung (sogenannte Cordialentfaltung), insbesondere bei In- und Out of Position Lastfällen zu ermöglichen. Ein besonderer Vorteil dieser Ausführungsform der erfindungsgemäßen Faltung ist, dass mit dieser Entfaltungsmethodik bzw. Charakteristik auf 2-stufige, pyrotechnische Airbaggasgeneratoren in manchen Anwendungsfällen zum Schutz in sogenannten Out of Position Situationen verzichtet werden kann.

Ein weiterer Vorteil der erfindungsgemäßen Faltung ist eine sehr gute und schnelle Entfaltungscharakteristik des Luftsackes zwischen dem unteren Lenkradkranz und dem Abdomen des Fahrers, welche gegenüber chaotischen Faltungen eine weitere Verbesserung aufzeigt. Dies kommt insbesondere bei Fahrzeugsituationen in denen der Insasse nahe am Lenkrad sitzt (z.B. die sogenannte 5%-Frau) zum tragen.

Die Gassackendabschnitte können sich im Umschlagbereich und/oder an ihren Enden kontaktieren.

Der Gasgenerator ist zum Beispiel torusförmig, und die Falten verlaufen entlang des Außenumfangs des Gasgenerators.

Der Gassack kann im mittleren Drittel Falten haben, die an entgegengesetzten Umfangsseiten des Gasgenerators entlang verlaufen.

Eine Ausführungsform der Erfindung wird in den nachfolgenden Zeichnungen erläutert. In diesen zeigen:
- Figur 1 einen ersten Schritt des erfindungsgemäßen Verfahrens zum Falten eines Gassacks,
- Figur 2 einen zweiten Schritt zum Falten des erfindungsgemäßen Gassacks,
- Figur 3 einen dritten Schritt zum Falten des erfindungsgemäßen Gassacks,
- Figur 4 den erfindungsgemäß gefalteten Gassack in Draufsicht ohne Gassackmodul gezeichnet,
- Figur 5 eine Draufsicht auf eine weitere Ausführungsform eines erfindungsgemäß gefalteten Gassacks, und
- Figur 6 eine Querschnittsansicht durch ein erfindungsgemäßes Gassackmodul.

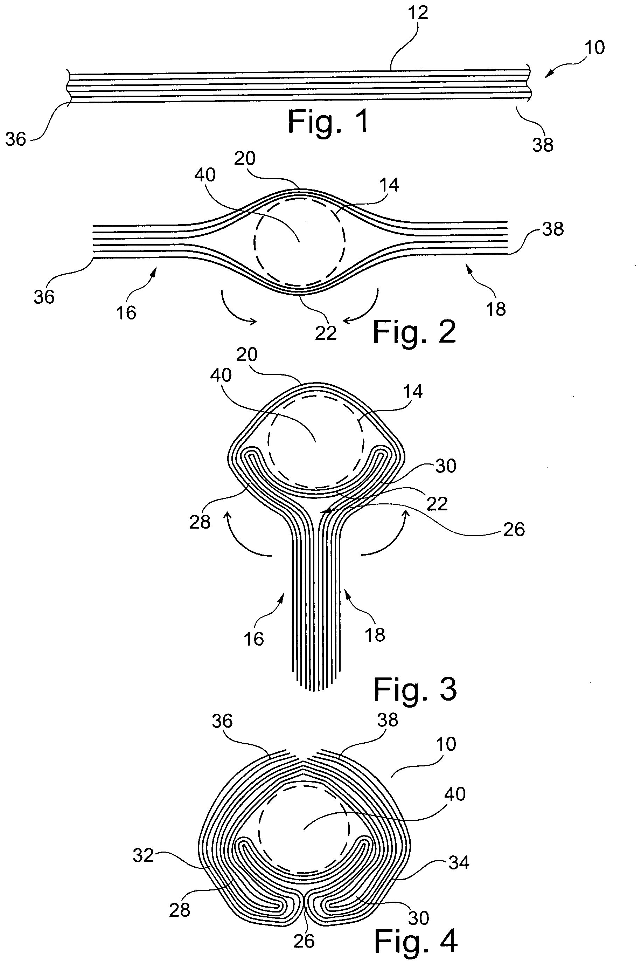

In Figur 1 ist ein Gassack 10 in Form eines Lenkrad-Gassacks gezeigt, der zickzackförmig vorgefaltet ist, mit zahlreichen parallel zueinander verlaufenden Falten 12.

Dieses Falten des Gassacks 10 zu einem länglichen, in Figur 1 dargestellten Gassackpaket erfolgt beispielsweise durch eine sogenannte thermofixierte Vorfaltung, bei der bei gleichzeitiger Wärmezufuhr der Gassack 10 in mehrere Z-förmige Falten gepresst wird. Es ergibt sich eine ziehharmonikaartige Struktur.

Der Gassack hat einen sogenannten Einblasmund, das heißt eine Öffnung in seinem, bezogen auf das längliche Paket in Figur 1, mittleren Drittel.

Über diese Öffnung wird nach dem Falten gemäß Figur 1 entweder der Gasgenerator 14, hier ein torusförmiger Gasgenerator 14, und/oder ein Halteblech für den Gasgenerator 14 eingelegt.

Das Halteblech hätte ebenfalls die in Figur 2 dargestellte Form und dient während des Faltungsverfahrens gegebenenfalls auch als Platzhalter für den später vom Gasgenerator 14 eingenommenen Raum. Nach dem Einlegen des Gasgenerators 14 oder des entsprechenden Halteblechs ergibt sich für das Gassackpaket die in Figur 2 dargestellte Struktur mit zwei in entgegengesetzten Richtungen bezogen auf den Gasgenerator 14 oder das Halteblech weisenden Gassackendabschnitten 16, 18, in denen das Paket die in Figur 1 dargestellte Form beibehält, sowie einem mittleren Abschnitt, bei dem sich das Gassackpaket in zwei Teile 20, 22 aufspaltet, die an entgegengesetzten Umfangsseiten des Gasgenerators 14 oder des Halteblechs eng an diesem anliegend entlang verlaufen.

In einem darauffolgenden Schritt werden die beiden Gassackendabschnitte 16, 18 wie in Figur 2 mit den Pfeilen gezeigt in entgegengesetzten Umfangsrichtungen und aufeinander zu um den Außenumfang des Gasgenerators 14 und/oder des Halteblechs herumgeführt, sodass die entsprechenden Abschnitte eng am Außenumfang anliegend verlaufen. Dieses Herumführen führt dann zu dem in Figur 3 gezeigten Zwischenzustand.

Die aufeinander zu verlaufenden Endabschnitte 16, 18 berühren sich dann oder berühren sich annähernd in einem sogenannten Umschlagbereich 26, der umfangsmäßig auf halbem Weg zwischen den beiden Gassackendabschnitten 16, 18 liegt, bezogen auf Figur 3 bei etwa 6 Uhr.

In diesem Umschlagbereich 26 werden dann die Gassackendabschnitte 16, 18, wie in Pfeilrichtung in Figur 3 gezeigt, wieder nach außen und in entgegengesetzte Richtung umgefaltet oder umgeschlagen und wieder von außen an das schon bestehende Paket angelegt. Es ergibt sich der in Figur 4 dargestellte Zustand.

Bis zum Umschlagbereich 26 ergibt sich somit ein innen liegender Teil 28, 30 des jeweiligen Gassackendabschnitts 16 bzw. 18. Nach dem Umschlagen nach außen werden auf diesen innen liegenden Teil 28, 30 jeweils ein außen liegender Teil 32 bzw. 34 des entsprechenden Gassackendabschnitts 16, 18 entlang verlegt. Optional können sich die Enden 36 bzw. 38 der Gassackendabschnitte 16 bzw. 18 dann berühren. Dies ist jedoch nicht zwingend erforderlich.

Wie man Figur 4 entnehmen kann, verläuft der gefaltete Teil des Gassacks 10 am Außenumfang des Gasgenerators 14 entlang. Das heißt, er ist nicht auf die in Entfaltungsrichtung (aus der Zeichenebene heraus) gewandte Stirnwand 40 des Gasgenerators 14 aufgelegt oder aufgefaltet. Dieser Bereich über der Stirnwand 40 bleibt komplett oder großteils frei vom gefalteten Paket des Gassacks 10, sodass hier nur eine Lage des Gassacks 10 über der Stirnwand 40 verläuft.

Bezüglich der Zeichnungen ist zu erwähnen, dass die Falten natürlich in der Praxis wesentlich näher zueinander verlaufen, sie sind nur aus zeichnerischen und Darstellungsgründen in den Figuren deutlicher voneinander entfernt dargestellt.

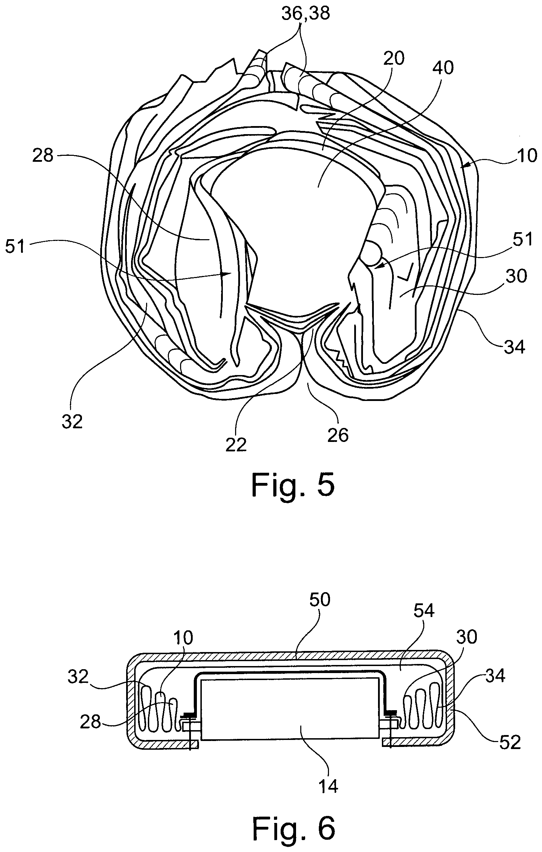

Bei der Ausführungsform nach Figur 5 gibt es backenartige, radial nach innen vorstehende Faltwülste 51, die über einen Teil der Stirnwand 40 des Gasgenerators ragen. Diese Faltwülste 51 sind Abschnitte des innen liegenden Teils 28, 30 der Gassackendabschnitte 16 bzw. 18. Wie in Figur 5 aber zu sehen ist, ist nach wie vor der Großteil der Stirnwand 40 des Gasgenerators 14 nur von einer Lage bedeckt und wird nicht vom Gassackpaket bedeckt.

In Figur 6 ist ein Querschnitt durch ein erfindungsgemäßes Gassackmodul dargestellt, bei dem der in den zuvor dargestellten Figuren vorgestellte Gassack 10 den Gasgenerator 14 umgibt. Das Gassackmodul weist darüber hinaus ein Modulgehäuse 50 mit einer Außenumfangswand 52 auf. Wie in Figur 6 zu sehen ist, ist zwischen dem Außenumfang des Gasgenerators 14 und der Außenumfangswand 52 ein umlaufender Spalt 54 gebildet, in welchen der Gassack hineingefaltet ist bzw. in welchem der gefaltete Gassack verläuft.

Ebenfalls ist in Figur 6 besonders gut erkennbar, dass gemäß einer hier dargestellten, bevorzugten Ausführungsform die einzelnen Faltungshöhen der zick-zack-förming gefalteten Luftsacklagen verschieden hoch ausgebildet sind. (Wenn von Höhe der Falten gesprochen wird, ist diese in Richtung einer Mittel bzw. Symmetrieachse des Gasgenerators 14, also senkrecht zu dessen Stirnwand 40 zu betrachten bzw. zu messen). Vorzugsweise wird hierbei eine weiter innen zu liegen kommende (näher am Gasgenerator 14 anzuordnende) Falte 28, 30 mit geringerer Höhe ausgebildet, als eine weiter außen zu liegen kommende (entfernter zum Gasgenerator anzuordnende) Falte 32, 34. Es ist bevorzugt, dass eine minimale Faltenhöhe kleiner als die halbe Höhe (oder als 2/3 der Höhe) des Gasgenerators oder des gefalteten Gassackpaketes ausgebildet wird. Hierdurch kann Gas aus des Auslaßöffnungen des Gasgenerators über die Köpfe der Falten hinweg auf die Innenseite des dem Fahrer zugewandten Abschnittes des Gassackpacketes stömen und den Gassack in einem primären Aufblaßvorgag schneller zum Fahrer hin aufblasen, bevor die Entfaltung zur Seite hin erfolgt. Daneben ist bevorzugt, dass eine maximale Faltenhöhe größer als die halbe Höhe des Gasgenerators oder des gefalteten Gassackpaketes, insbesondere in etwa oder (bis auf eine Dicke von ein bis fünf mal die Materaldicke des Gassackmaterials) genauso hoch wie die Höhe des Gasgenerators oder des gefalteten Gassackpaketes ausgebildet wird. Hierbei ist bevorzugt, dass eine minimale Faltenhöhe niedriger als 30mm, vorzugsweise als 20mm ausgebildet wird. Daneben ist bevorzugt, dass eine maximale Faltenhöhe höher als 35mm, vorzugsweise höher als 50mm, weiter vorzugsweise höher als 70mm ausgebildet wird. Insbesondere ist bevorzugt, dass die Höhe der Falten von innen nach außen (vom Gasgenerator 14 zum Modulrand hin) ansteigt bzw. zunimmt. Hierdurch wird die zuvor beschriebene Wirkung noch verstärkt.

Natürlich ist diese nach außen zu ansteigende Ausführungsform der Faltung insbesondere (oder nur) für die innersten (dem Gasgenerator 14 am nächsten liegenden) Faltungspakete bzw. Faltungspaketabschnitte 20, 22 (Fig. 2, 3) ausgebildet bzw. ausbildbar. Bei den äußeren, bzw. rückgefalteten Abschnitten 16, 18 ist sodann vorzugsweise eine im Wechsel ab- und ansteigende (V- oder VVförmige) Kontur der Faltungshöhen ausgebildet. Dies weist aber keinen negativen Effekt auf die zuvor beschriebene Wirkung auf.

## Patentansprüche

1. Gassackmodul, mit einem Gasgenerator (14) und einem Gassack (10), in dem der Gasgenerator (14) sitzt, wobei der Gassack (10) in mehrere parallel zueinander verlaufende Falten gelegt ist, um in einem Zwischenzustand ein längliches Paket zu bilden, wobei der Gasgenerator (14) bezogen auf die Länge der parallelen Falten im mittleren Drittel im Gassack (10) positioniert ist, und wobei die äußeren Drittel Gassackendabschnitte (16, 18) des Gassacks (10) bilden, die jeweils zu wenigstens zwei Teilen (28, 30, 32, 34) gefaltet sind, wobei die beiden innen liegenden Teile (28, 30) am Außenumfang des Gasgenerators (14) entlang aufeinander zu bis zu einem Umschlagbereich (26) verlaufen, und wobei das jeweils außen liegende Teil (32, 34) jedes Gassackendabschnitts (16, 18) vom Umschlagbereich (26) ausgehend nach außen umgeschlagen und an seinem zugeordneten innen liegenden Teil (28, 30) entlang in Gegenrichtung verläuft.

2. Gassackmodul nach Anspruch 1, **dadurch gekennzeichnet, dass** sich die Gassackendabschnitte (16, 18) im Umschlagbereich (26) und/oder mit ihren Enden (36, 38) kontaktieren.

3. Gassackmodul nach Anspruch 1 oder 2, **dadurch gekennzeichnet, dass** der Gasgenerator (14) torusförmig ist und die Falten an seinem Außenumfang entlang verlaufen und/oder dass der Gassack (10) im mittleren Drittel Falten (20, 22) hat, die an entgegengesetzten Umfangsseiten des Gasgenerators (14) entlang verlaufen.

4. Gassackmodul nach einem der vorhergehenden Ansprüche, **dadurch gekennzeichnet, dass** Falten (20, 22; 28, 32; 30, 34) des Gassackes (10) in einzelnen Faltungshöhen der zick-zack-förmig gefalteten Luftsacklagen verschieden hoch ausgebildet sind, wobei vorzugsweise die Höhe der Falten von innen nach außen ansteigt bzw. zunimmt.

5. Gassackmodul nach Anspruch 4, **dadurch gekennzeichnet, dass** eine weiter innen zu liegen kommende Falte (28, 30) mit geringerer Höhe ausgebildet wird, als eine weiter außen zu liegen kommende Falte (32, 34), wobei vorzugsweise eine minimale Faltenhöhe kleiner als die halbe Höhe oder als 2/3 der Höhe des Gasgenerators oder des gefalteten Gassackpaketes ausgebildet wird und/oder wobei vorzugsweise eine maximale Faltenhöhe größer als die halbe Höhe des Gasgenerators oder des gefalteten Gassackpaketes, insbesondere in etwa oder bis auf eine Dicke von ein bis fünf mal die Materaldicke des Gassackmaterials genauso hoch wie die Höhe des Gasgenerators oder des gefalteten Gassackpaketes ausgebildet wird.

6. Gassackmodul nach einem der vorhergehenden Ansprüche, **dadurch gekennzeichnet, dass** es ein Lenkradmodul ist.

7. Verfahren zum Falten eines Gassacks (10) für ein Gassackmodul nach einem der vorhergehenden Ansprüche, mit den folgenden Schritten:
a) Zickzack-Falten des Gassacks (10) in einen länglichen Zustand,
b) Einlegen eines Gasgenerators (14) und/oder eines Gassackhalteblechs in den Gassack (10), wobei der Gasgenerator (14) und/oder das Gassackhalteblech im mittleren Drittel des länglich gefalteten Gassacks (10) liegt, sodass zwei Gassackendabschnitte (16, 18) vom Gasgenerator (14) und/oder vom Gassackhalteblech abstehen,
c) Herumführen der Gassackendabschnitte (16, 18) um den Außenumfang des Gasgenerators (14) und/oder des Gassackhalteblechs in entgegengesetzten Richtungen aufeinander zu, bis zu einem Umschlagbereich (26), in dem sich die Gassackendabschnitte (16, 18) zumindest nahezu berühren, und
d) Umschlagen der Gassackendabschnitte (16, 18) ab dem Umschlagbereich (26) nach außen und Herumführen der Gassackendabschnitte (16, 18) in Gegenrichtung um den Außenumfang des Gasgenerators (14) und/oder des Gassackhalteblechs und um einen darauf liegenden, innen liegenden Teil (28, 30) der Gassackendabschnitte (16, 18) herum, zur Bildung eines außen liegenden Teils (32, 34).

8. Verfahren nach Anspruch 7, **dadurch gekennzeichnet, dass** die außen liegenden Teile (32, 34) der Gassackendabschnitte (16, 18) so weit umgeschlagen werden, dass ihre Enden (36, 38) einander berühren.

9. Verfahren nach Anspruch 7 oder 8, **dadurch gekennzeichnet, dass** der Gasgenerator (14) und/oder das Gassackhalteblech im Schritt b) so im Gassack (10) positioniert wird, dass quer zur Längserstreckung des länglich gefalteten Gassacks (10) Falten (20, 22) auf entgegengesetzten Umfangsseiten des Gasgenerators (14) und/oder des Gassackhalteblechs am Gasgenerator (14) und/oder am Gassackhalteblech entlang verlaufen.

10. Verfahren nach einem der Ansprüche 7 bis 9, **dadurch gekennzeichnet, dass** der Gassack (10) zur Schaffung der Zickzack-Faltung thermisch erwärmt und/oder gepresst wird.

11. Verfahren nach einem der Ansprüche 7 bis 10, **dadurch gekennzeichnet, dass** der Gasgenerator (14) torusförmig ist und die Falten am Außenumfang des Torus entlang gelegt sind.

12. Verfahren nach einem der Ansprüche 7 bis 11, **dadurch gekennzeichnet, dass** der Gassack (10) in einem topfförmigen Modulgehäuse (50) gefaltet untergebracht ist.

13. Verfahren nach Anspruch 12, **dadurch gekennzeichnet, dass** die gefalteten Abschnitte des Gassacks (10) in einem Umfangsspalt (54) zwischen der Außenumfangswand (52) des Modulgehäuses (50) und dem Außenumfang des Gasgenerators (14) verlaufen und/oder dass zumindest ein Teil, vorzugsweise ein Großteil einer Stirnwand (40) des Gasgenerators (14), die in Entfaltungsrichtung weist, nur von einer Gassacklage überdeckt wird.

14. Verfahren nach einem der Ansprüche 7 bis 13, **dadurch gekennzeichnet, dass** Falten (20, 22; 28,32; 30, 34) des Gassackes (10) in einzelnen Faltungshöhen der zick-zack-förmig gefalteten Luftsacklagen verschieden hoch ausgebildet werden.

15. Verfahren nach Anspruch 14, **dadurch gekennzeichnet, dass** eine weiter innen zu liegen kommende Falte (28, 30) mit geringerer Höhe ausgebildet wird, als eine weiter außen zu liegen kommende Falte (32, 34), wobei vorzugsweise eine minimale Faltenhöhe kleiner als die halbe Höhe oder als 2/3 der Höhe des Gasgenerators oder des gefalteten Gassackpaketes ausgebildet wird und/oder wobei vorzugsweise eine maximale Faltenhöhe größer als die halbe Höhe des Gasgenerators oder des gefalteten Gassackpaketes, insbesondere in etwa oder bis auf eine Dicke von ein bis fünf mal die Materaldicke des Gassackmaterials genauso hoch wie die Höhe des Gasgenerators oder des gefalteten Gassackpaketes ausgebildet wird, und/oder wobei, weiter vorzugsweise, die Höhe der Falten von innen nach außen ansteigt bzw. zunimmt.

## Claims

1. An airbag module comprising a gas generator (14) and an airbag (10) in which the gas generator (14) is located, wherein the airbag (10) is laid into plural folds extending in parallel to each other so as to form an elongate package in an intermediate state, wherein the gas generator (14), related to the length of the parallel folds, is positioned in the central third in the airbag (10), and wherein the outer thirds form airbag end portions (16, 18) of the airbag (10) being folded into at least two parts (28, 30, 32, 34), wherein the two internal parts (28, 30) extend along the outer circumference of the gas generator (14) toward each other up to a folding zone (26) and wherein the respective external part (32, 34) of each airbag end portion (16, 18) is folded over outwards starting from the folding zone (26) and extends along its associated internal part (28, 30) in the opposite direction.

2. The airbag module according to claim 1, **characterized in that** the airbag end portions (16, 18) contact each other in the folding zone (26) and/or with their ends (36, 38).

3. The airbag module according to claim 1 or 2, **characterized in that** the gas generator (14) is toroidal and the folds extend along its outer circumference and/or that in the central third the airbag (10) includes folds (20, 22) which extend along opposite circumferential sides of the gas generator (14).

4. The airbag module according to any one of the preceding claims, **characterized in that** the folds (20, 22; 28, 32; 30, 34) of the airbag (10) at individual folding heights of the zigzag-folded airbag layers are designed to be of different height, wherein preferably the height of the folds increases from the inside to the outside.

5. The airbag module according to claim 4, **characterized in that** a further inwardly located fold (28, 30) is designed to have a lower height than a further outwardly located fold (32, 34), wherein preferably a minimum fold height is designed to be smaller than half the height or than 2/3 of the height of the gas generator or of the folded airbag package and/or wherein preferably a maximum fold height is designed to be larger than half the height of the gas generator or of the folded airbag package, especially approximately or, except a thickness of one to five times the material thickness of the airbag material, exactly as high as the height of the gas generator or of the folded airbag package.

6. The airbag module according to any one of the preceding claims, **characterized in that** it is a steering wheel module.

7. A method for folding an airbag (10) for an airbag module according to any of the preceding claims comprising the following steps:
a) zigzag-folding the airbag (10) into an elongate state,
b) inserting a gas generator (14) and/or an airbag-retaining metal sheet into the airbag (10), wherein the gas generator (14) and/or the airbag-retaining metal sheet is/are located in the central third of the airbag (10) folded in elongate shape so that two end portions (16, 18) of the airbag project from the gas generator (14) and/or from the airbag-retaining metal sheet,
c) guiding the airbag end portions (16, 18) around the outer circumference of the gas generator (14) and/or of the airbag-retaining metal sheet in opposite directions toward each other up to a folding zone (26) in which the end portions (16, 18) of the airbag at least almost contact each other, and
d) folding over the end portions (16, 18) of the airbag starting from the folding zone (26) outwards and guiding the airbag end portions (16, 18) in opposite direction around the outer circumference of the gas generator (14) and/or of the airbag-retaining metal sheet and around an internal part (28, 30) of the airbag end portions (16, 18) located thereon for forming an external part (32, 34).

8. The method according to claim 7, **characterized in that** the external parts (32, 34) of the airbag end portions (16, 18) are folded over so far that their ends (36, 38) contact each other.

9. The method according to claim 7 or 8, **characterized in that** the gas generator (14) and/or the airbag-retaining metal sheet in step b) is/are positioned in the airbag (10) so that transversely to the longitudinal extension of the airbag (10) folded into an elongate shape folds (20, 22) extend on opposite circumferential sides of the gas generator (14) and/or the airbag-retaining metal sheet along the gas generator (14) and/or along the airbag-retaining metal sheet.

10. The method according to any one of the claims 7 to 9, **characterized in that** the airbag (10) is thermally heated and/or compressed for forming the zigzag folding.

11. The method according to any one of the claims 7 to 10, **characterized in that** the gas generator (14) is toroidal and that the folds are laid along the outer circumference of the torus.

12. The method according to any one of the claims 7 to 11, **characterized in that** the airbag (10) when folded is accommodated in a cup-shaped module casing (50).

13. The method according to claim 12, **characterized in that** the folded portions of the airbag (10) extend in a peripheral gap (54) between the outer circumferential wall (52) of the module casing (50) and the outer circumference of the gas generator (14) and/or that at least a part, preferably a majority of an end face (40) of the gas generator (14) facing in the deployment direction is covered by only one airbag layer.

14. The method according to any one of the claims 7 to 13, **characterized in that** folds (20, 22; 28, 32; 30, 34) of the airbag (10) in individual folding heights of the zigzag-folded airbag layers are designed to be of different height.

15. The method according to claim 14, **characterized in that** a further inwardly located fold (28, 30) of lower height than a further outwardly located fold (32, 34) is formed, wherein preferably a minimum fold height is designed to be smaller than half the height or than 2/3 of the height of the gas generator or of the folded airbag package and/or wherein preferably a maximum fold height is designed to be larger than half the height of the gas generator or of the folded airbag package, especially approximately or, except a thickness of one to five times the material thickness of the airbag material, exactly as high as the height of the gas generator or of the folded airbag package, and/or wherein, further preferably, the height of the folds increases from the inside to the outside.

## Revendications

1. Module airbag, comportant un générateur de gaz (14) et un coussin gonflable (10), dans lequel le générateur de gaz (14) est logé, pour lequel le coussin gonflable (10) est disposé en plusieurs plis parallèles entre eux, pour former dans un état intermédiaire un paquet oblong, pour lequel le générateur de gaz (14) en fonction de la longueur des plis parallèles est positionné dans le tiers médian du coussin gonflable (10), et pour lequel les tiers extérieurs forment les zones d'extrémité (16, 18) du coussin gonflable (10), qui sont repliées dans chaque cas en au moins deux parties (28, 30, 32, 34), pour lequel les deux parties reposant à l'intérieur (28, 30) courent sur la périphérie extérieure du générateur de gaz (14) le long l'une de l'autre jusqu'à une zone de retournement (26), et pour lequel chaque partie extérieure respective (32, 34) de chaque zone d'extrémité du coussin gonflable (16, 18) s'étend depuis la zone de retournement (26) en sortant tournée vers l'extérieur et en sa partie interne associée (28, 30) s'étend le long de la direction opposée.

2. Module airbag selon la revendication 1, **caractérisé en ce que** les zones d'extrémité (16, 18) du coussin gonflable sont en contact dans la zone de retournement (26) et/ou avec leurs extrémités (36, 38).

3. Module airbag selon la revendication 1 ou 2, **caractérisé en ce que** le générateur de gaz (14) est toroïdal et que les plis s'étendent le long de sa circonférence extérieure et/ou que le sac gonflable (10) a des plis (20, 22) dans le tiers médian, qui s'étendent le long des côtés circonférentiels opposés du générateur de gaz (14).

4. Module airbag selon l'une quelconque des revendications précédentes, **caractérisé en ce que** les plis (20, 22, 28, 32, 30, 34) du sac gonflable (10) sont formés avec des hauteurs différentes dans chacune des hauteurs de pliage des différentes couches du coussin gonflable plié en zigzag, pour lequel, de préférence la hauteur des plis grandit ou bien augmente de l'intérieur vers l'extérieur.

5. Module airbag selon la revendication 4, **caractérisé en ce qu'**un autre pli se situant à l'intérieur du pliage (28, 30) est formé avec une hauteur inférieure, qu'un autre pli se situant à l'extérieur du pliage (32, 34), pour lequel, de préférence, une hauteur de pli minimale est inférieure à la moitié de la hauteur ou aux 2/3 de la hauteur du générateur de gaz ou du sac gonflable plié et/ou, de préférence, pour lequel une hauteur de pli maximale est supérieure à la moitié de la hauteur du générateur de gaz ou du coussin gonflable plié, en particulier elle est conçu approximativement jusqu'à une épaisseur de une à cinq fois l'épaisseur du matériau du sac gonflable pour être aussi élevée que la hauteur du générateur de gaz ou du sac gonflable plié.

6. Module airbag selon l'une des revendications précédentes, **caractérisé en ce qu'**il s'agit d'un module airbag de volant.

7. Procédé de pliage d'un sac gonflable (10) pour un module airbag selon l'une des revendications précédentes, comprenant les étapes suivantes:
a) pliage en zigzag du coussin à gaz (10) dans un état oblong,
b) Insertion d'un générateur de gaz (14) et/ou d'une plaque de retenue du sac dans le coussin gonflable (10), pour lequel le générateur de gaz (14) et/ou la plaque de retenue du sac se situe dans le tiers médian du coussin gonflable plié (10) oblong, de sorte que deux zones d'extrémités (16, 18) du coussin gonflable dépassent du générateur de gaz (14) et/ou de la plaque de retenue du sac gonflable,
c) guidage des zones d'extrémité (16, 18) du coussin gonflable autour de la périphérie extérieure du générateur de gaz (14) et/ou de la plaque de retenue de coussin gonflable dans des directions opposées l'une vers l'autre, vers une zone de retournement (26), dans laquelle les zones d'extrémité (16, 18) du coussin gonflable en sont au moins presque à se toucher, et
d) Pliage des zones d'extrémité (16, 18) du coussin gonflable depuis la partie de retournement (26) vers l'extérieur et guidage des zones d'extrémité (16, 18) du coussin gonflable dans la direction opposée autour de la circonférence extérieure du générateur de gaz (14) et/ou de la plaque de retenue de coussin gonflable et autour d'une partie intérieure (28, 30) située à l'intérieur des sections d'extrémité (16, 18) du coussin gonflable, pour former une partie extérieure (32, 34).

8. Procédé selon la revendication 7, **caractérisé en ce que** les parties extérieures (32, 34) des zones d'extrémité (16, 18) du coussin gonflable sont retournées au point que leurs extrémités (36, 38) se touchent.

9. Procédé selon la revendication 7 ou 8, **caractérisé en ce que** le générateur de gaz (14) et/ou la plaque de retenue de coussin gonflable durant l'étape b) est positionné dans le coussin gonflable (10), de sorte que transversalement au sens longitudinale du coussin gonflable plié oblong (10), les plis (20, 22) s'étendent sur les côtés circonférentiels opposés du générateur de gaz (14) et/ou de la plaque de retenue du sac gonflable sur le générateur de gaz (14) et/ou sur la plaque de retenue du sac gonflable.

10. Procédé selon l'une quelconque des revendications 7 à 9, **caractérisé en ce que** le sac gonflable (10) est chauffé thermiquement et/ou pressé pour créer le pliage en zigzag.

11. Procédé selon l'une quelconque des revendications 7 à 10, **caractérisé en ce que** le générateur de gaz (14) est torique et les plis sont placés le long de la circonférence extérieure du tore.

12. Procédé selon l'une quelconque des revendications 7 à 11, **caractérisé en ce que** le sac gonflable (10) est logé plié dans un boitier de module (50) en forme de coupelle.

13. Procédé selon la revendication 12, **caractérisé en ce que** les parties pliées du sac gonflable (10) s'étendent dans une fente circonférentielle (54) entre la paroi périphérique extérieure (52) du boîtier de module (50) et la circonférence extérieure du générateur de gaz (14) et/ou qu'au moins une partie, de préférence une majorité d'une paroi d'extrémité (40) du générateur de gaz (14), qui pointe dans la direction de déploiement, est recouverte uniquement d'une couche de coussin gonflable.

14. Procédé selon l'une quelconque des revendications 7 à 13, **caractérisé en ce que** les plis (20, 22, 28, 32, 30, 34) du coussin gonflable (10) sont formés avec des hauteurs différentes dans chacune des hauteurs de pliage des différentes couches du coussin gonflable plié en zigzag

15. Procédé selon la revendication 14, **caractérisé en ce qu'**un autre pli se situant à l'intérieur du pliage (28, 30) est formé avec une hauteur inférieure, qu'un autre pli se situant à l'extérieur du pliage (32, 34), pour lequel, de préférence, une hauteur de pli minimale est inférieure à la moitié de la hauteur ou aux 2/3 de la hauteur du générateur de gaz ou du sac gonflable plié et/ou, de préférence, pour lequel une hauteur de pli maximale est supérieure à la moitié de la hauteur du générateur de gaz ou du coussin gonflable plié, en particulier approximativement jusqu'à une épaisseur de une à cinq fois l'épaisseur du matériau du sac gonflable pour être aussi élevée que la hauteur du générateur de gaz ou du sac gonflable plié et/ou pour lequel, plus préférentiellement, la hauteur des plis grandit ou bien augmente de l'intérieur vers l'extérieur.
